# EUROPEAN PATENT APPLICATION

(11) **EP 4 462 522 A1**
(43) Date of publication of application: **13.11.2024**
(21) Application number: 22918740.6
(22) Date of filing: 28.11.2022
(51) Int. Cl.: H01M 4/96, H01M 8/18

(54) **ELECTRODE, BATTERY CELL, CELL STACK, AND REDOX-FLOW BATTERY SYSTEM**

(30) Priority: 06.01.2022 JP 2022000993
(71) Applicant: SUMITOMO ELECTRIC INDUSTRIES, LTD., Osaka-shi, Osaka 541-0041 (JP); TOYOBO MC Corporation, Osaka 530-0001 (JP)
(72) Inventor: OYA, Masayuki, Osaka-shi, Osaka 541-0041 (JP); KAWAGOE, Yoshiyasu, Osaka-shi, Osaka 541-0041 (JP); SAWADA, Shin-ichi, Osaka-shi, Osaka 541-0041 (JP); IGARASHI, Takashi, Otsu-shi, Shiga 520-0292 (JP); IWAHARA, Ryohei, Otsu-shi, Shiga 520-0292 (JP)
(74) Representative: Hoffmann Eitle
(86) International application number: PCT/JP2022/043804
(87) International publication number: WO 2023/132153

(57) **Abstract**

An electrode for use in a redox-flow battery system comprises carbon fibers. A compressive strain factor determined by dividing a difference between a first thickness of the electrode and a second thickness of the electrode by the first thickness is more than 0.6. The first thickness is a thickness of the electrode measured in a state where a surface pressure of 0.7 kPa is applied to the electrode. The second thickness is a thickness of the electrode measured in a state where a surface pressure of 0.8 MPa is applied to the electrode.

## Description

### TECHNICAL FIELD

The present disclosure relates to an electrode, a battery cell, a cell stack, and a redox-flow battery system.

The present application claims the benefit of priority to Japanese Patent Application No. 2022-000993 filed on January 6, 2022, the entire contents of which are incorporated herein by reference.

### BACKGROUND ART

Redox-flow batteries are one type of rechargeable batteries in which the electrolyte is supplied to the electrode to cause battery reactions. Typically, the electrode used in redox-flow batteries is a sheet-form member. In the redox-flow battery disclosed by PTL 1, a carbon paper sheet is used as an electrode, which comprises carbon fibers, carbon binder residues, and carbon particles deposited on the carbon fibers.

### CITATION LIST

### PATENT LITERATURE

PTL 1: Japanese National Patent Publication No. 2015-505148

### SUMMARY OF INVENTION

An electrode according to the present disclosure is
an electrode for use in a redox-flow battery system, the electrode comprising:
carbon fibers, wherein
a compressive strain factor determined by dividing a difference between a first thickness of the electrode and a second thickness of the electrode by the first thickness is more than 0.6,
the first thickness is a thickness of the electrode measured in a state where a surface pressure of 0.7 kPa is applied to the electrode, and
the second thickness is a thickness of the electrode measured in a state where a surface pressure of 0.8 MPa is applied to the electrode.

A battery cell according to the present disclosure is
a battery cell for use in a redox-flow battery system, comprising the electrode according to the present disclosure.

A cell stack according to the present disclosure is
a cell stack for use in a redox-flow battery system, comprising a plurality of the battery cells according to the present disclosure.

A redox-flow battery system according to the present disclosure comprises
the battery cell according to the present disclosure, or the cell stack according to the present disclosure.

### BRIEF DESCRIPTION OF DRAWINGS

Fig. 1 is a schematic perspective view illustrating an electrode of a redox-flow battery system according to an embodiment.
Fig. 2 is a schematic close-up view of a region A1 in Fig. 1.
Fig. 3A is a schematic close-up cross-sectional view illustrating a region A2 in a III-III cross section in Fig. 2.
Fig. 3B is a schematic view illustrating a carbon particle formed of a first particle.
Fig. 4A is a descriptive view of a method for measuring a compressive strain factor, showing a state before a sample is compressed.
Fig. 4B is a descriptive view of a method for measuring a compressive strain factor, showing a state in which a sample is compressed between an upper plate and a bottom plate.
Fig. 5 is a schematic diagram illustrating the configuration of a redox-flow battery system according to an embodiment.
Fig. 6 is a schematic diagram illustrating the configuration of a cell stack of a redox-flow battery system according to an embodiment.
Fig. 7 is a schematic diagram illustrating the configuration of a measuring system used for measuring pressure loss of a redox-flow battery system in Test Examples.

### DETAILED DESCRIPTION

### [Problem to be Solved by the Present Disclosure]

Development of a redox-flow battery system that is low in diffusive resistivity is demanded.

An object of the present disclosure is to provide an electrode that makes it possible to construct a redox-flow battery system that is low in diffusive resistivity. Another object of the present disclosure is to provide a battery cell, a cell stack, and a redox-flow battery system comprising the electrode.

### [Advantageous Effect of the Present Disclosure]

The electrode, the battery cell, and the cell stack according to the present disclosure make it possible to construct a redox-flow battery system that is low in diffusive resistivity. The redox-flow battery system according to the present disclosure is low in diffusive resistivity.

### [Description of Embodiments]

An electrode that comprises carbon particles, as compared to an electrode that does not comprise carbon particles, has a large surface area and therefore has excellent battery reactivity. In order to reliably hold the carbon particles on carbon fibers, a binder is required. The inventors of the present invention have found that when the electrode includes a binder, the diffusive resistivity may be increased. The inventors of the present invention investigated configurations that are low in diffusive resistivity, and, as a result, have completed at the present invention. First, aspects of the present disclosure will be described below.
(1) An electrode according to an aspect of the present disclosure is an electrode for use in a redox-flow battery system, wherein the electrode comprises carbon fibers. A compressive strain factor determined by dividing a difference between a first thickness of the electrode and a second thickness of the electrode by the first thickness is more than 0.6. The first thickness is a thickness of the electrode measured in a state where a surface pressure of 0.7 kPa is applied to the electrode. The second thickness is a thickness of the electrode measured in a state where a surface pressure of 0.8 MPa is applied to the electrode.
   The electrode according to the present disclosure can include a binder in a content within the range that achieves a compressive strain factor of more than 0.6. In an electrode that includes a binder within the above-mentioned range, the binder is not contained too much. As a result, the electrolyte can readily diffuse in the electrode. Hence, the electrode according to the present disclosure makes it possible to construct a redox-flow battery system that is low in diffusive resistivity. Moreover, the electrode according to the present disclosure also makes it possible to construct a redox-flow battery system described below.
   (A) The electrolyte can readily flow in the electrode. Therefore, pressure loss is low.
   (B) When the electrode according to the present disclosure is compressed, active site density may be increased and/or contact points between the carbon fibers may be increased. Therefore, charge-transfer resistivity may be decreased. When the compressed electrode comes into contact with a bipolar plate, contact resistance between the electrode and the bipolar plate is decreased. Therefore, conductive resistivity may be decreased. As a result, cell resistivity may be decreased.
   (C) In the electrode that includes a binder within the above-mentioned range and also includes carbon particles, at least part of the binder reliably holds the carbon particles on the carbon fibers. Due to the carbon particles, the surface area of the electrode is increased. This type of electrode is also excellent in battery reactivity. In this respect, too, cell resistivity tends to be decreased.
(2) The electrode according to (1) above may include carbon particles.
   Due to the carbon particles, the surface area of the electrode is increased.
(3) In the electrode according to (2) above, a content ratio of the carbon particles may be not less than 1 mass% and less than 50 mass% relative to the electrode regarded as 100 mass%.
   The electrode has a large surface area, as compared to an electrode in which the content ratio of carbon particles is less than 1 mass%. Moreover, because the above electrode does not contain too much carbon particles, only a small amount of binder is required. When the amount of the binder is small, the electrolyte can readily diffuse in the electrode.
(4) The electrode according to (2) or (3) above may include a plurality of primary particles. Each of the plurality of primary particles is the carbon particle. The plurality of primary particles may have an average diameter of 15 µm or less.
   The electrode has a large surface area, as compared to an electrode in which the average diameter is more than 15 µm.
(5) The electrode according to any one of (2) to (4) above may include first particles. Each of the first particles is the carbon particle having a plurality of pores on a surface of the first particle, and a porosity attributed to the pores is 10% or more.
   The surface area of the first particles is larger than the surface area of particles in which a porosity attributed to pores is less than 10%. Therefore, the above electrode has a large surface area, as compared to an electrode that does not comprise first particles.
(6) In the electrode according to (5) above, a highest peak diameter of the pores may be 1 µm or less.
   The electrode has a large surface area, as compared to when the highest peak diameter of the pores is more than 1 µm.
(7) The electrode according to any one of (1) to (6) above may include a binder.
   At least part of the binder can hold the carbon particles on the carbon fibers.
(8) In the electrode according to (7) above, a content ratio of the binder may be not less than 0.1 mass% and less than 40 mass% relative to the electrode regarded as 100 mass%.
   At least part of the binder can hold the carbon particles on the carbon fibers. Moreover, because the electrode does not contain too much binder, the electrolyte can readily diffuse in the electrode.
(9) In the electrode according to (7) or (8) above, the binder may be made of a carbon material or a resin.
   A carbon material is electrically conductive. Therefore, an electrode comprising a binder made of a carbon material is excellent in electrical conductivity, as compared to an electrode comprising a binder made of a resin. A binder made of a resin is required relatively in a small amount to hold the carbon particles on the carbon fibers, as compared to a binder made of a carbon material. When the amount of the binder is small, the electrolyte can readily diffuse in the electrode.
(10) The electrode according to any one of (1) to (8) above may include carbon particles and a binder. The binder may be made of a carbon material. The mass ratio of the binder to the carbon particles may be from 0.1 to 10.
   The electrode comprises the binder made of a carbon material and the carbon particles in a good balance.
(11) The electrode according to any one of (1) to (8) above may include carbon particles and a binder. The binder may be made of a resin. The mass ratio of the binder to the carbon particles may be from 0.005 to 3.
   The electrode comprises the binder made of a resin and the carbon particles in a good balance.
(12) In the electrode according to any one of (1) to (11) above, a compressive strain factor determined by dividing a difference between the first thickness and a third thickness of the electrode by the first thickness may be 0.90 or less. The third thickness is a thickness of the electrode measured in a state where a surface pressure of 0.3 MPa is applied to the electrode.
   When the surface pressure applied to the electrode is 0.3 MPa, as compared to when the surface pressure is 0.8 MPa, the amount of deformation of the electrode is small. For example, in the case of a battery cell in which about 0.3 MPa of surface pressure is applied to the electrode and which comprises a bipolar plate having a groove in which an electrolyte can flow, only a small amount of the electrode penetrates into the groove. This type of battery cell is excellent in the flowability of the electrolyte, due to not only the above item (A) but also the groove in the bipolar plate.
(13) In the electrode according to any one of (1) to (12) above, a compressive strain factor determined by dividing a difference between the first thickness and a fourth thickness of the electrode by the first thickness may be 0.92 or less. The fourth thickness is a thickness of the electrode measured in a state where a surface pressure of 0.5 MPa is applied to the electrode.
   When the surface pressure applied to the electrode is 0.5 MPa, as compared to when the surface pressure is 0.8 MPa, the amount of deformation of the electrode is small. For example, in the case of a battery cell in which about 0.5 MPa of surface pressure is applied to the electrode and which comprises a bipolar plate having a groove in which an electrolyte can flow, only a small amount of the electrode penetrates into the groove. This type of battery cell is excellent in the flowability of the electrolyte, due to not only the above item (A) but also the groove in the bipolar plate.
(14) In the electrode according to any one of (1) to (13) above, a mass per unit area of the electrode may be from 20 g/m² to 600 g/m².
   When the electrode is compressed, active site density may be increased and/or contact points between the carbon fibers may be increased. Moreover, the electrode includes some voids. Therefore, the electrode is excellent in the flowability of the electrolyte, also due to the voids.
(15) In the electrode according to any one of (1) to (14) above, the first thickness may be from 0.10 mm to 3.0 mm.
   The electrode can ensure a certain level of battery performance, and also makes it possible to construct a thin battery cell.
(16) In the electrode according to any one of (1) to (15) above, a void rate of the electrode measured in a state where no surface pressure is applied to the electrode may be 50% or more.
   The electrode may include voids even when it is being compressed. Therefore, the electrode is excellent in the flowability of the electrolyte, also due to the voids.
(17) A battery cell according to an aspect of the present disclosure is a battery cell for use in a redox-flow battery system, and comprises the electrode according to any one of (1) above to (16) above.
   The battery cell according to the present disclosure makes it possible to construct a redox-flow battery system that is low in diffusive resistivity. Moreover, the battery cell according to the present disclosure makes it possible to construct a redox-flow battery system that is low in pressure loss, low in charge-transfer resistivity and conductive resistivity, and excellent in battery reactivity.
(18) A cell stack according to an aspect of the present disclosure is a cell stack for use in a redox-flow battery system, and comprises a plurality of the battery cells according to (17) above.
   The cell stack according to the present disclosure makes it possible to construct a redox-flow battery system that is low in diffusive resistivity. Moreover, the cell stack according to the present disclosure makes it possible to construct a redox-flow battery system that is low in pressure loss, low in charge-transfer resistivity and conductive resistivity, and excellent in battery reactivity.
(19) A redox-flow battery system according to an aspect of the present disclosure comprises the battery cell according to (17) above or the cell stack according to (18) above.
   The redox-flow battery system according to the present disclosure is low in diffusive resistivity. Moreover, the redox-flow battery system according to the present disclosure exhibits such effects as low pressure loss, low charge-transfer resistivity and conductive resistivity, and excellent battery reactivity.
(20) The redox-flow battery system according to the present disclosure may comprise a positive electrolyte and a negative electrolyte that are supplied to the battery cell. The positive electrolyte may include manganese ions. The negative electrolyte may include titanium ions.

The redox-flow battery system has a high electromotive force.

### «Detailed Description of Embodiments»

In the following, a redox-flow battery system according to an embodiment of the present disclosure is described in detail. Hereinafter, a redox-flow battery system may also be expressed as an RF battery system. In the drawings, members that have the same name are given the same reference numeral. The dimensions of and dimensional relationship between constituent members in each figure may not necessarily coincide with the actual dimensions and dimensional relationship.

### <<Embodiments>>

### [RF Battery System]

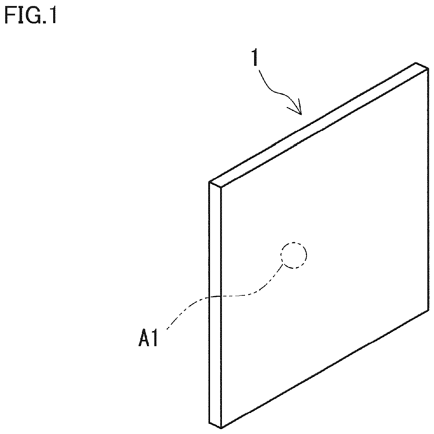

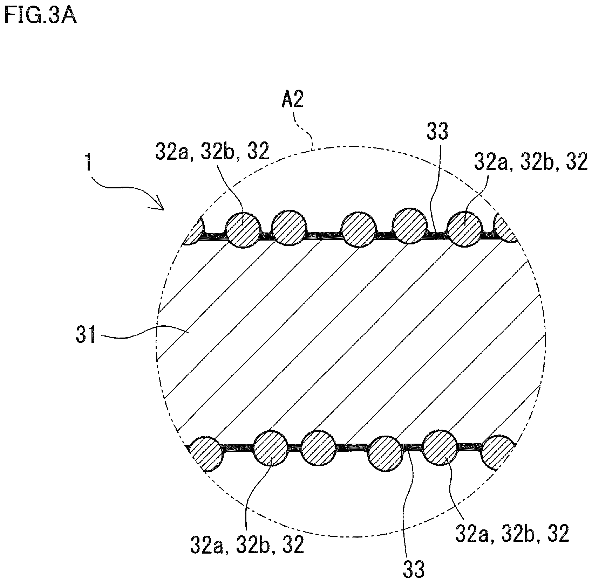

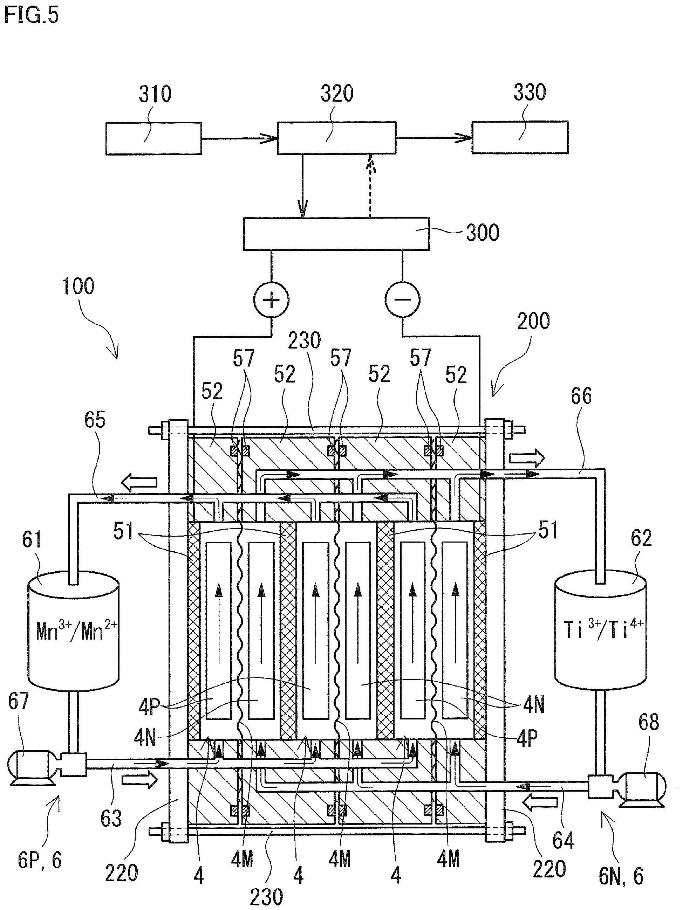

Referring to Fig. 1 to Fig. 6, an RF battery system 100 according to an embodiment will be described. As illustrated in Fig. 5, RF battery system 100 comprises a battery cell 4 and a circulation mechanism 6. Battery cell 4 comprises a membrane 4M, a positive electrode 4P, and a negative electrode 4N. Membrane 4M is interposed between positive electrode 4P and negative electrode 4N. At least one of positive electrode 4P and negative electrode 4N is configured by an electrode 1 illustrated in Fig. 1 to Fig. 3A. Circulation mechanism 6 circulates an electrolyte to battery cell 4. One of the characteristics of RF battery system 100 is to comprise electrode 1 according to an embodiment. Electrode 1 has a somewhat high first compressive strain factor, which is to be described below. Electrode 1 illustrated in Fig. 3A includes carbon fibers 31, carbon particles 32, and a binder 33. In the following, the outline and the fundamental configuration of RF battery system 100, as well as the detailed configuration of RF battery system 100 will be described in this order.

### [Outline of RF Battery System]

RF battery system 100 illustrated in Fig. 5 is charged with and stores the electric power generated in an electric power generating member 310, discharges the electric power thus stored, and supplies it to a load 330. Typically, RF battery system 100 is connected between electric power generating member 310 and load 330, with an AC/DC converter 300 and a transformer facility 320 interposed therebetween. Electric power generating member 310 is a photovoltaic power generator, a wind power generator, or an ordinary power plant, for example. Load 330 is an electric power consumer, for example. The solid arrow extending from transformer facility 320 toward AC/DC converter 300 represents charging. The broken arrow extending from AC/DC converter 300 toward transformer facility 320 represents discharging. RF battery system 100 uses a positive electrolyte and a negative electrolyte. Each of the positive electrolyte and the negative electrolyte includes an active material. Typically, the active material is metal ions the valence of which changes along with oxidation and reduction. Charging and discharging of RF battery system 100 proceed based on the difference between the redox potential of ions included in the positive electrolyte and the redox potential of ions included in the negative electrolyte. RF battery system 100 is used for the purpose of load leveling, instantaneous voltage drop compensation, emergency power source application, and output smoothing of natural energy in photovoltaic power generation, wind power generation, and the like, for example.

### [Fundamental Configuration of RF Battery]

Battery cell 4 in RF battery system 100 is divided by membrane 4M into a positive electrode cell and a negative electrode cell. Membrane 4M is an ionexchange membrane that does not allow transmission of electrons but allows transmission of, for example, hydrogen ions. The positive electrode cell internally includes positive electrode 4P. The negative electrode cell internally includes negative electrode 4N. Circulation mechanism 6 in RF battery system 100 comprises a positive electrode circulation mechanism 6P and a negative electrode circulation mechanism 6N. Positive electrode circulation mechanism 6P circulates the positive electrolyte to the positive electrode cell. Negative electrode circulation mechanism 6N circulates the negative electrolyte to the negative electrode cell.

### [Electrode]

Electrode 1 is a sheet-form member that contributes to battery reactions. Fig. 1 illustrates a single electrode 1. Electrode 1 illustrated in Fig. 3A has a structure in which binder 33 holds carbon particles 32 on carbon fibers 31.

### fundamental Configuration>

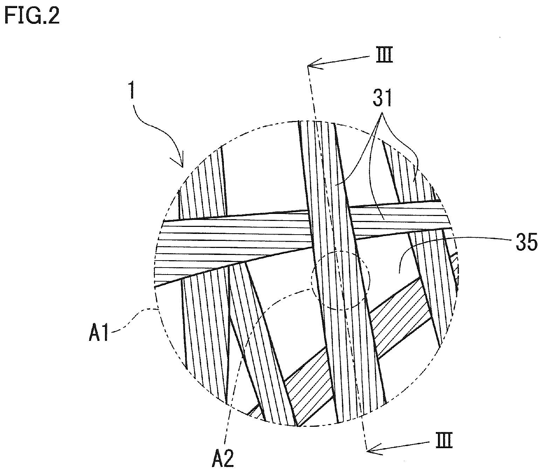

Typically, electrode 1 is one selected from the group consisting of nonwoven fabric, woven fabric, and paper. The nonwoven fabric is formed of a plurality of independent carbon fibers 31 entangled together. The woven fabric is formed of the warp of carbon fibers 31 and the weft of carbon fibers 31 woven alternately. The paper is formed of a plurality of carbon fibers 31 secured by at least part of binder 33. Electrode 1 illustrated in Fig. 2 is a nonwoven fabric.

### <Materials>

### <Carbon Fibers>

Electrode 1 includes carbon fibers 31. Carbon fibers 31 is a main component of electrode 1. The expression "Carbon fibers is a main component of electrode 1" herein means that the content ratio of the carbon fibers is 50 mass% or more relative to the electrode regarded as 100 mass%. The expression "the electrode regarded as 100 mass%" means that the total content ratio of the carbon fibers, the carbon particles, and the binder is 100 mass%. When electrode 1 does not include the carbon particles, the content ratio of the carbon particles is 0 mass%. When electrode 1 does not include the binder, the content ratio of the binder is 0 mass%. Among carbon fibers 31, carbon particles 32, and binder 33, the content ratio of carbon fibers 31 is the highest in electrode 1. When the content ratio of the carbon fibers is 50 mass% or more, electrode 1 can ensure a certain strength and shape. The content ratio of the carbon fibers may be 55 mass% or more, or may be 60 mass% or more, or may be 70 mass% or more.

The content ratio of each of carbon fibers 31, carbon particles 32, and binder 33 in electrode 1 is determined by a thermogravimeter-differential thermal analyzer (TG-DTA) in an argon (Ar) atmosphere. When it is difficult to discriminate between carbon fibers 31, carbon particles 32, and binder 33 by a TG-DTA in an argon atmosphere, a different atmosphere may be used. Examples of the atmosphere other than an argon atmosphere include carbon dioxide (CO₂) atmosphere and water vapor atmosphere. As the TG-DTA, a commercially-available apparatus can be used.

Typically, electrode 1 includes a plurality of carbon fibers 31 as illustrated in Fig. 2. The plurality of carbon fibers 31 form a three-dimensional network structure. The plurality of carbon fibers 31 are spaced from each other, and, thereby, voids 35 are formed between the plurality of carbon fibers 31. Voids 35 are used as channels for the electrolyte to flow.

The average diameter of the plurality of carbon fibers is from 2 µm to 30 µm, for example. When the average diameter is 2 µm or more, electrode 1 may have a high strength. When the average diameter is 30 µm or less, the surface area of the carbon fibers per unit mass may be large. The larger the surface area of electrode 1 is, the more enhanced the battery reactivity may be. The average diameter of the plurality of carbon fibers may be from 5 µm to 25 µm, or from 7 µm to 20 µm.

The average diameter of the plurality of carbon fibers is the average of the diameters of circles that have the same area as the cross-sectional area of respective carbon fibers, and is determined in the below-described manner. Electrode 1 is cut in the thickness direction of electrode 1. By this cutting, cross sections of the plurality of carbon fibers 31 are exposed. In the cross section of electrode 1, five or more examination fields of view are selected under a microscope. The microscope used here is a scanning electron microscope (SEM), for example. The magnification for the cross section examination is from 500 times to 3000 times, for example. For three or more carbon fibers per one examination field of view, the diameter of a circle that has the same area as the cross-sectional area of each carbon fiber is determined. The diameters of the circles determined in all the five or more examination fields of view are averaged. The average value thus determined is the average diameter of the plurality of carbon fibers.

### <Carbon Particles>

Carbon particles 32 increase the surface area of electrode 1. Electrode 1 including carbon particles 32 can have a large surface area, as compared to when not including carbon particles 32. The larger the surface area of electrode 1 is, the more enhanced the battery reactivity may be.

Electrode 1 includes a plurality of primary particles 32a, for example. Each of the plurality of primary particles 32a is a single fine carbon particle 32, and, typically, it is a spherical particle. Each of carbon particles 32 illustrated in Fig. 3A is a primary particle 32a. Electrode 1 may include secondary particles (not illustrated). Each of the secondary particles is a group of primary particles 32a aggregated to each other, and it is called an aggregate.

The average diameter of the plurality of primary particles is 15 µm or less, for example. Electrode 1 in which the average diameter is 15 µm or less has a large surface area, as compared to an electrode in which the average diameter is more than 15 µm. From the viewpoint of increasing the surface area, the average diameter may be 10 µm or less, or 5 µm or less, or 1 µm or less, or 0.5 µm or less, or 0.1 µm or less. The lower limit to the average diameter is 0.01 µm, or 0.03 µm, or 0.05 µm, for example. The average diameter of the plurality of primary particles may be from 0.01 µm to 15 µm, or from 0.02 µm to 10 µm, or from 0.025 µm to 1 µm.

The average diameter of the plurality of primary particles is determined with an image analyzer, by directly measuring the size of the primary particles in an electron micrograph. The procedure is as follows. A surface or a cross section of electrode 1 is examined with an electron microscope. Under the microscope, a single examination field of view is selected. The microscope used here is a transmission electron microscope (TEM), for example. The magnification for examination is from 500 times to 300,000 times, for example. For 10² to 10⁴ primary particles per one examination field of view, the outline of each primary particle is approximated as a perfect circle. For each primary particle, the diameter of the approximated perfect circle is determined. The diameters thus determined are averaged. The average value thus determined is the average diameter of the plurality of primary particles. When electrode 1 includes secondary particles, the diameters of the primary particles that form the secondary particles may be determined. The average diameter of the plurality of primary particles is easily determined by using a commercially-available automatic particle size analyzer that is capable of automatically approximating to a perfect circle, measuring the diameter of the perfect circle, and calculating the average value. For the measurement of the average diameter, an automatic particle size analyzer manufactured by ZEISS can be used, for example.

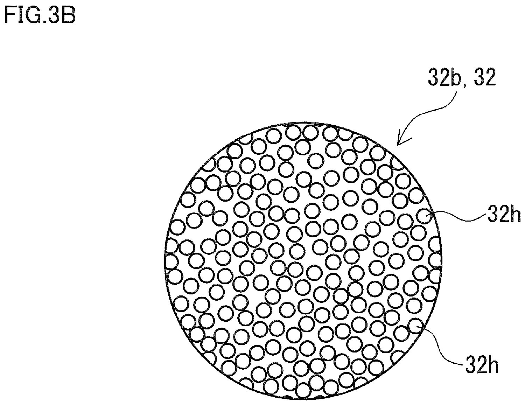

Electrode 1 includes first particles 32b, for example. Each of first particles 32b herein is a carbon particle 32 that has a plurality of fine pores 32h on the surface of first particle 32b as illustrated in Fig. 3B, and it is an example of primary particle 32a. Quantitatively speaking, each first particle 32b is a carbon particle 32 in which a porosity attributed to the pores is 10% or more. Each of carbon particles 32 illustrated in Fig. 3A is a first particle 32b. In other words, each of carbon particles 32 illustrated in Fig. 3A is a primary particle 32a consisting of first particle 32b. In Fig. 3A, pores 32h are omitted. Due to the plurality of fine pores 32h, the surface area of first particle 32b is large, as compared to the surface area of a second particle (not illustrated) in which the porosity attributed to pores is not less than 0% and less than 10%. Therefore, electrode 1 comprising first particles 32b has a large surface area, as compared to an electrode that does not comprise the first particles. When part of binder 33 penetrates into part of the plurality of fine pores 32h, the amount of binder 33 that is available for securing carbon fibers 31 to each other may be decreased. In this case, electrode 1 includes carbon fibers 31 that are not secured by binder 33. This type of electrode 1 may have a higher first compressive strain factor, which is described below. Moreover, when this type of electrode 1 is compressed, active site density may be increased and/or contact points between carbon fibers 31 may be increased. From the viewpoints of increasing the surface area, enhancing the active site density, and increasing the contact points between the carbon fibers, the porosity attributed to the pores may be 15% or more, or 20% or more. The upper limit to the porosity attributed to the pores is 80%, or 75%, or 70%, for example. The porosity attributed to the pores of the first particle may be from 10% to 80%, or from 15% to 75%, or from 20% to 70%.

The porosity attributed to the pores herein refers to (S0-S1)/S0, the proportion of the specific surface area of the pores, (S0-S1), to the total specific surface area of the first particles, S0, expressed in percentage. The specific surface area of the pores, (S0-S1), is the difference between the total specific surface area S0 and a specific surface area S1 which is determined by subtracting the pores from the total specific surface area S0. The method for measuring the total specific surface area S0 can be a nitrogen adsorption method (a BET method), for example. The method for measuring the specific surface area S1 can be direct image analysis with the use of an electron microscope, for example. Other measurement methods include a method that involves averaging the pores on the surface of the particles as liquid nitrogen multi-molecular layer adsorption and then from the proportional relationship between the statistic average thickness and the adsorbed amount, determining the specific surface area, as well as a cetyl trimethyl ammonium bromide (CTAB) method. Electrode 1 including first particles 32b with a porosity attributed to the pores being 10% or more can be produced by using, as a raw material, carbon particles with a porosity attributed to the pores being more than 10%, for example. The carbon particles as a raw material may be, for example, those with a porosity attributed to the pores being from 20% to 90%, or even from 50% to 80%. The porosity attributed to the pores in first particles 32b of electrode 1 tends to decrease from the porosity attributed to the pores in the carbon particles as a raw material, but it may be substantially maintained depending on the production conditions. By judging the presence or absence of pores in carbon particles 32 by the above-described electron microscope examination of electrode 1, it is possible to estimate the porosity attributed to the pores in first particles 32b of electrode 1.

The highest peak diameter of the pores of the first particles is 1 µm or less, for example. Electrode 1 in which the highest peak diameter is 1 µm or less has a large surface area, as compared to an electrode in which the highest peak diameter is more than 1 µm. From the viewpoint of increasing the surface area, the highest peak diameter may be 0.8 µm or less, or 0.5 µm or less. The lower limit to the highest peak diameter is 0.001 µm, or 0.003 µm, or 0.005 µm, for example. The highest peak diameter of the pores of the first particles may be from 0.001 µm to 1 µm, or from 0.003 µm to 0.8 µm, or from 0.005 µm to 0.5 µm. The highest peak diameter of the pores is determined by mercury porosimetry in a state where no surface pressure is applied to electrode 1, for example. The highest peak diameter of the pores of the first particles determined by mercury porosimetry is the pore diameter that yields the highest peak among all the peaks attributed to the pores of the first particles on a curve of Log differential pore volume distribution. On the curve thus obtained by mercury porosimetry, the pore diameter for the peak attributed to voids 35 between carbon fibers 31 is more than 1 µm. Therefore, the pore diameter for the peak attributed to voids 35 may be easily differentiated from the pore diameter for the peak attributed to the pores of the first particles. The pore diameter for the peak attributed to the above-described primary particles of carbon particles 32 may be 1/2 or less, or may be 1/5 or less, or may be 1/10 or less of the average diameter of the above-described primary particles.

Electrode 1 including the first particles with a highest peak diameter of the pores of 1 µm or less can be produced by using, as a raw material, carbon particles with a highest peak diameter of the pores of 1 µm or less, for example. Examples of the carbon particles with a highest peak diameter of the pores of 1 µm or less include those with a highest peak diameter of the pores of 1 µm or less, or 0.8 µm or less, or 0.5 µm or less. Although it depends on the production conditions, the highest peak diameter of the pores in the first particles of electrode 1 may be maintained substantially the same as the highest peak diameter of the pores in the carbon particles as a raw material. By judging the presence or absence of pores by the above-described electron microscope examination of electrode 1, it is possible to estimate the highest peak diameter of the pores in the first particles of electrode 1.

Electrode 1 may include second particles in addition to first particles 32b. Alternatively, electrode 1 may include second particles, without including the first particles. That is, electrode 1 may include carbon particles 32 that do not have fine pores on the surface of the particles.

Each of the plurality of primary particles 32a may be a first particle 32b, or may be a second particle. When at least some of, or all of, the plurality of primary particles 32a are first particles 32b, electrode 1 may have a large surface area. Even when some of or all of the plurality of primary particles 32a are second particles, if the above-described average diameter is 15 µm or less, or if the average diameter is even smaller, electrode 1 may have a large surface area.

For example, the content ratio of the carbon particles is not less than 1 mass% and less than 50 mass% relative to the electrode regarded as 100 mass%. When the content ratio is 1 mass% or more, electrode 1 has a large surface area due to carbon particles 32. When the content ratio is less than 50 mass%, carbon particles 32 are not contained too much. In that case, electrode 1 can include binder 33. By binder 33, carbon particles 32 are reliably held on carbon fibers 31. As a result, due to carbon particles 32, the surface area of electrode 1 is increased. From the viewpoint of increasing the surface area, the content ratio of the carbon particles may be from 3 mass% to 40 mass%, or from 4 mass% to 35 mass%, or from 5 mass% to 30 mass%.

### <Binder>

When electrode 1 includes binder 33, by at least part of binder 33, carbon particles 32 can be held on carbon fibers 31. Part of binder 33 may secure carbon fibers 31 to each other while the rest of binder 33 may hold carbon particles 32 on carbon fibers 31. When the content ratio of the binder is 0.001 mass% or more relative to the electrode regarded as 100 mass%, for example, binder 33 of electrode 1 can firmly secure carbon particles 32 in contact with carbon fibers 31. As a result, a state of carbon particles 32 being held by carbon fibers 31 without falling off from carbon fibers 31 is maintained for an extended period of time.

Typically, binder 33 is made of a material that includes a carbon element (C). For example, binder 33 is made of a carbon material, a resin, an alcohol, or a rubber. Specific examples of the alcohol include furfuryl alcohol. Specific examples of the rubber include acrylonitrile-butadiene rubber.

The carbon material is a material that consists essentially of carbon, and it may include a trace amount of impurities such as oxygen and hydrogen. The carbon material is electrically conductive. Therefore, when binder 33 is made of a carbon material, binder 33 is electrically conductive. Electrode 1 that comprises this type of binder 33 is excellent in electrical conductivity as compared to, for example, an electrode that comprises binder 33 made of a resin. As a raw material of binder 33 made of a carbon material, organic matter such as a pitch and/or a resin described below is used, for example. The raw material is carbonized by heating at a high temperature, and thereby a carbon material is formed.

When binder 33 is made of a resin, it is required relatively in a small amount to secure carbon particles 32 on carbon fibers 31, as compared to, for example, binder 33 made of a carbon material. When the amount of binder 33 is small, the electrolyte may diffuse in electrode 1, the active site density may be increased at the time when electrode 1 is compressed, and/or contact points between carbon fibers 31 may be increased. Specific examples of the resin include phenolic resin, polytetrafluoroethylene resin, benzoxazine resin, epoxide resin, furan resin, vinyl ester resin, melamine-formaldehyde resin, urea-formaldehyde resin, resorcinol-formaldehyde resin, cyanate ester resin, bismaleimide resin, polyurethane resin, and polyacrylonitrile resin. As a raw material of binder 33 made of a resin, a mixture including the resin and a dispersion medium is used, for example. By drying, the dispersion medium is removed from the raw material and the resin is left. The drying is carried out at a temperature at which the resin does not undergo carbonization.

For example, the content ratio of the binder is not less than 0.1 mass% and less than 40 mass% relative to the electrode regarded as 100 mass%. When the content ratio is 0.1 mass% or more, by at least part of binder 33, carbon particles 32 are reliably held on carbon fibers 31. As a result, due to carbon particles 32, the surface area of electrode 1 is increased. From the viewpoint of increasing the surface area, the content ratio may be 0.2 mass% or more, or 0.3 mass% or more, or 1 mass% or more, or 3 mass% or more. When the content ratio is less than 40 mass%, binder 33 is not contained too much. In that case, the flow of the electrolyte in electrode 1 tends not to be inhibited by binder 33. In other words, the electrolyte readily diffuses in electrode 1. Moreover, the amount of binder 33 for securing carbon fibers 31 to each other is small. This type of electrode 1 includes carbon fibers 31 that are not secured by binder 33. Therefore, a first compressive strain factor described below may be increased. Moreover, when this type of electrode 1 is compressed, active site density may be increased and/or contact points between carbon fibers 31 may be increased. From the viewpoint of enhancing diffusivity of the electrolyte, enhancing the active site density, and increasing the contact points between the carbon fibers, the content ratio may be 38 mass% or less, or 35 mass% or less, or 30 mass% or less. The content ratio of the binder may be from 0.2 mass% to 38 mass%, or from 0.3 mass% to 35 mass%, or from 1 mass% to 30 mass%.

In electrode 1 in which binder 33 is made of a carbon material, the mass ratio of the binder to the carbon particles is from 0.1 to 10, for example. When the mass ratio satisfies the above-mentioned range, electrode 1 comprises carbon particles 32 and binder 33 made of a carbon material in a good balance. As a result, electrode 1 exhibits such effects as increased surface area, enhanced diffusivity of the electrolyte, increased active site density, and good electrical conductivity. The mass ratio may be from 0.2 to 8.0, or from 0.5 to 7.0. When binder 33 is made of a carbon material, the content ratio of binder 33 may be not less than 1 mass% and less than 40 mass%, or from 3 mass% to 38 mass%, or from 5 mass% to 30 mass%.

In electrode 1 in which binder 33 is made of a resin, the mass ratio of the binder to the carbon particles is from 0.005 to 3, for example. When the mass ratio satisfies the above-mentioned range, electrode 1 comprises carbon particles 32 and binder 33 made of a resin in a good balance. As a result, electrode 1 exhibits such effects as increased surface area, enhanced diffusivity of the electrolyte, and increased active site density. The mass ratio may be from 0.008 to 2, or from 0.01 to 1. When binder 33 is made of a resin, the content ratio of binder 33 may be from 0.1 mass% to 10 mass%, or from 0.2 mass% to 8 mass%, or not less than 0.3 mass% and less than 5 mass%.

### <Other Constituent Materials>

In addition to carbon fibers 31, carbon particles 32, and binder 33, electrode 1 may include at least one of a catalyst, a hydrophilic material, and a hydrophobic material. The catalyst facilitates battery reactions.

### <Compressive Strain Factor>

In electrode 1, the compressive strain factor that is determined by dividing the difference between a first thickness t1 of electrode 1 and a second thickness t2 of electrode 1 by first thickness t1 is more than 0.6. Hereinafter, this compressive strain factor is called a first compressive strain factor. The first compressive strain factor is a value determined by ((first thickness t1)-(second thickness t2))/(first thickness t1). First thickness t1 is the thickness of electrode 1 that is measured in a state where a surface pressure of 0.7 kPa is applied to electrode 1. Second thickness t2 is the thickness of electrode 1 that is measured in a state where a surface pressure of 0.8 MPa is applied to electrode 1. Each of first thickness t1, second thickness t2, and a third thickness t3 and a fourth thickness t4 described below is a value measured of electrode 1 that is not installed in RF battery system 100.

First thickness t1 is measured in conformity with JIS L 1096:2010, Method A (JIS method). More specifically, a commercially-available thickness measurement apparatus is used to measure the thickness of electrode 1 over a certain amount of time under a certain amount of pressure. The above-mentioned time is 10 seconds. The above-mentioned pressure is 0.7 kPa.

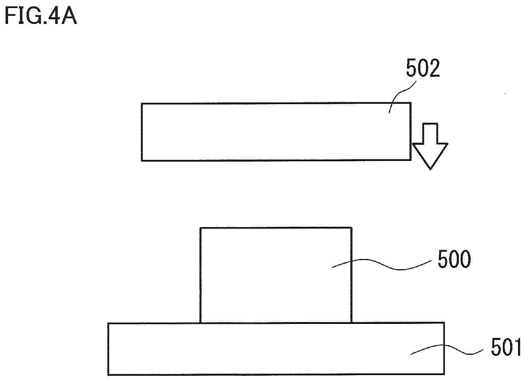

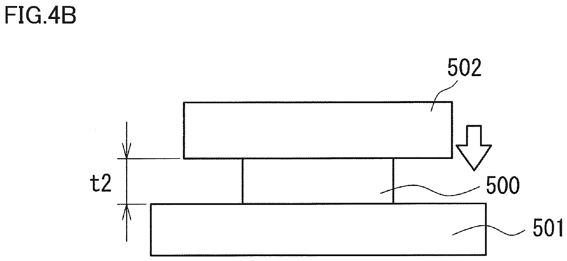

Second thickness t2 is measured by using a commercially-available strength evaluation apparatus, in the manner described below. Electrode 1 is cut into a size of 10 mm×10 mm. The fragment thus cut as illustrated in Fig. 4A is a measurement sample 500. The strength evaluation apparatus comprises a bottom plate 501 and an upper plate 502 which is movable up and down relative to bottom plate 501. The surface of bottom plate 501 and upper plate 502, respectively, that is to be brought into contact with measurement sample 500 is designed to be sufficiently larger than the above-mentioned size of measurement sample 500. Measurement sample 500 is placed on bottom plate 501. As illustrated in Fig. 4B, upper plate 502 is lowered from above the measurement sample 500 toward the bottom plate 501. Bottom plate 501 is not moved. Between bottom plate 501 and upper plate 502, measurement sample 500 is sandwiched. The position of upper plate 502 is adjusted so that a pressure of 0.8 MPa is applied to measurement sample 500. Measurement sample 500 is compressed mainly by the pressure applied by upper plate 502. In this compressed state, the thickness of measurement sample 500 is measured. The thickness thus measured is second thickness t2. Third thickness t3 and fourth thickness t4 described below are measured in the same manner but the pressure applied to measurement sample 500 is changed to 0.3 MPa or 0.5 MPa.

Hereinafter, an electrode with a first compressive strain factor of 0.6 or less is called a comparative electrode.

Electrode 1 can include binder 33 in a content within the range that achieves a first compressive strain factor of more than 0.6. In electrode 1 that includes binder 33 within the above-mentioned range, binder 33 is not contained too much. As a result, the flow of the electrolyte in electrode 1 tends not to be inhibited by binder 33. In other words, the electrolyte readily diffuses in electrode 1. Therefore, in RF battery system 100 that comprises electrode 1 having a first compressive strain factor of more than 0.6, as compared to when it comprises a comparative electrode, the diffusive resistivity is low. Because the electrolyte readily flows in electrode 1, pressure loss in RF battery system 100 that comprises electrode 1 is also low. Moreover, when electrode 1 is compressed, active site density may be increased as compared to a comparative electrode, and/or contact points between carbon fibers 31 may be increased as compared to a comparative electrode. Therefore, in RF battery system 100 that comprises electrode 1 having a first compressive strain factor of more than 0.6, charge-transfer resistivity may also be low. Further, when the compressed electrode 1 comes into contact with a bipolar plate 51, contact resistance between electrode 1 and bipolar plate 51 is decreased. Therefore, in RF battery system 100 that comprises electrode 1 having a first compressive strain factor of more than 0.6, conductive resistivity may also be low. As a result, in RF battery system 100 that comprises electrode 1 having a first compressive strain factor of more than 0.6, cell resistivity which is a combination of diffusive resistivity, charge-transfer resistivity, and conductive resistivity may be low. From these effects, the first compressive strain factor may be more than 0.65, or may be 0.67 or more, or may be 0.70 or more. From the viewpoint of ensuring the binder 33, the upper limit to the first compressive strain factor is 0.98, or 0.95, or 0.93, for example. The first compressive strain factor may be more than 0.6 and not more than 0.98, or from 0.67 to 0.95, or from 0.70 to 0.93.

In an example of electrode 1, the compressive strain factor that is determined by dividing the difference between first thickness t1 of electrode 1 and third thickness t3 of electrode 1 by first thickness t1 is 0.90 or less. Hereinafter, this compressive strain factor is called a second compressive strain factor. The second compressive strain factor is a value determined by ((first thickness t1)-(third thickness t3))/(first thickness t1). Third thickness t3 is the thickness of electrode 1 that is measured in a state where a surface pressure of 0.3 MPa is applied to electrode 1. In another example of electrode 1, the compressive strain factor that is determined by dividing the difference between first thickness t1 of electrode 1 and fourth thickness t4 of electrode 1 by first thickness t1 is 0.92 or less. Hereinafter, this compressive strain factor is called a third compressive strain factor. The third compressive strain factor is a value determined by ((first thickness t1)-(fourth thickness t4))/(first thickness t1). Fourth thickness t4 is the thickness of electrode 1 that is measured in a state where a surface pressure of 0.5 MPa is applied to electrode 1.

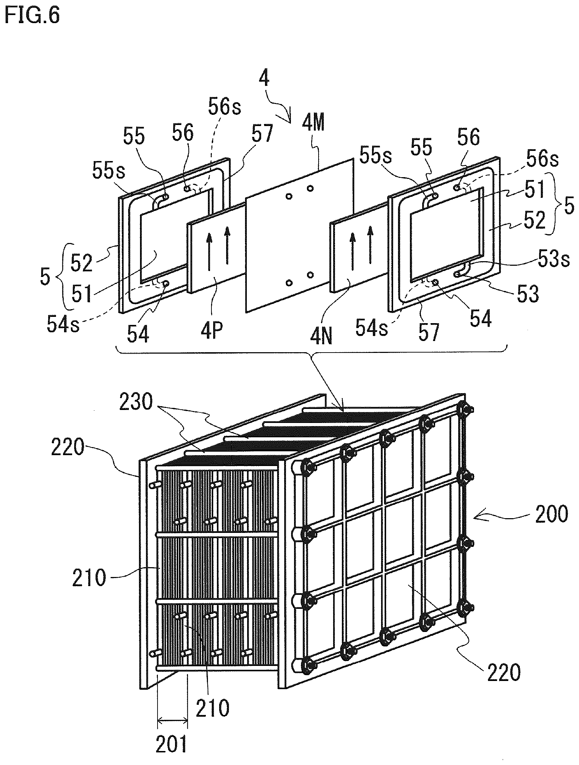

When the surface pressure applied to electrode 1 is 0.3 MPa or 0.5 MPa, as compared to when it is 0.8 MPa, the amount of deformation of electrode 1 is small. For example, in RF battery system 100 in which the surface pressure applied to electrode 1 is from 0.3 MPa to 0.5 MPa, and when battery cell 4 comprises bipolar plate 51 having a groove in which the electrolyte can flow (see Fig. 6), only a small amount of electrode 1 penetrates into the groove. In this type of RF battery system 100, the flowability of the electrolyte is excellent not only because the electrolyte readily diffuses as described above but also because of the groove of bipolar plate 51. In the figure, the groove of bipolar plate 51 is omitted.

The second compressive strain factor may be 0.85 or less, or 0.83 or less. The lower limit to the second compressive strain factor is 0.40, or 0.45, or 0.48, for example. The second compressive strain factor may be more than 0.40 and not more than 0.90, or from 0.45 to 0.85, or from 0.48 to 0.83.

The third compressive strain factor may be 0.90 or less, or 0.88 or less. The lower limit to the third compressive strain factor is 0.46, or 0.48, or 0.50, for example. The third compressive strain factor may be more than 0.46 and not more than 0.92, or from 0.48 to 0.90, or from 0.50 to 0.88.

The surface pressure applied to electrode 1 in RF battery system 100 is determined from first thickness t1 of electrode 1, the planar area of electrode 1, and a thickness t of electrode 1 of RF battery system 100. The planar area of electrode 1 is the area of electrode 1 when viewed in a plane in the thickness direction of electrode 1. Thickness t is the thickness of electrode 1 when electrode 1 is compressed by the above-mentioned surface pressure. The surface pressure is determined by dividing the compression force applied to change thickness t1 into thickness t, by the planar area.

### <Thickness>

First thickness t1 of the electrode is from 0.10 mm to 3.0 mm, for example. When thickness t1 is 0.10 mm or more, carbon fibers 31, carbon particles 32, and binder 33 are ensured. As a result, in RF battery system 100 that comprises electrode 1 having a thickness t1 of 0.10 mm or more, a certain level of battery performance can be ensured. Moreover, when thickness t1 is 0.10 mm or more, electrode 1 is also excellent in strength. When thickness t1 is 3.0 mm or less, as compared to an electrode having a thickness t1 of more than 3.0 mm, electrode 1 is thin. Battery cell 4 that comprises this type of electrode 1 can be thin. From the viewpoint of ensuring battery performance and achieving a thin shape, thickness t1 may be from 0.15 mm to 2.0 mm, or from 0.20 mm to 1.5 mm, or from 0.30 mm to 1.3 mm.

### <Mass Per Unit Area>

The mass per unit area of the electrode is from 20 g/m² to 600 g/m², for example. When the mass per unit area is 20 g/m² or more, at the time when electrode 1 is compressed, active site density may be increased and/or contact points between carbon fibers 31 may be increased. When the mass per unit area is 600 g/m² or less, electrode 1 includes some voids 35. Also due to voids 35, electrode 1 is excellent in the flowability of the electrolyte. From the viewpoint of enhancing the active site density, increasing the contact points between the carbon fibers, and the flowability of the electrolyte, the mass per unit area may be from 25 g/m² to 500 g/m², or from 30 g/m² to 450 g/m². The mass per unit area is determined by measuring the mass of the electrode per unit area.

### <Void Rate>

Electrode 1 is excellent in the flowability of the electrolyte when it includes voids 35 as described above. For example, when measured in a state where no surface pressure is applied to electrode 1, namely in a non-compressed state, the void rate of electrode 1 is 50% or more. The void rate is the volume ratio of voids 35 to electrode 1 that includes voids 35, expressed in percentage. The void rate is expressed relative to the volume of electrode 1 that includes voids 35, which is regarded as 100%. When the void rate in the above-mentioned non-compressed state is 50% or more, some voids 35 are still present even when electrode 1 is being compressed. Therefore, due to voids 35, electrode 1 is excellent in the flowability of the electrolyte. From the viewpoint of the flowability of the electrolyte, the void rate in the above-mentioned non-compressed state may be 60% or more, or 65% or more, or 70% or more. From the viewpoint of ensuring battery reactivity, the void rate in the above-mentioned non-compressed state may be 99% or less, or may be 97% or less, or may be 95% or less. The void rate in the above-mentioned non-compressed state may be from 60% to 99%, or from 65% to 97%, or from 70% to 95%. When carbon fibers 31 of electrode 1 have uniform true density, the void rate is determined by "1-{(mass per unit area (g/m²))/(thickness t1 (m))/(true density of carbon fibers 31 (g/m³))}". The true density of carbon fibers 31 is determined by measurement in conformity with JIS R 7603:1999, Method A: liquid replacement method.

### [Cell Stack]

Battery cell 4 is usually formed inside a structure called a cell stack 200, as illustrated in Fig. 5 and in the lower drawing of Fig. 6. Cell stack 200 comprises a stack of a plurality of battery cells 4, two end plates 220, and a fastening mechanism 230. As illustrated in the upper drawing of Fig. 6, the stack is formed by stacking multiple sets of a cell frame 5, positive electrode 4P, membrane 4M, and negative electrode 4N in this order. Cell stack 200 illustrated in the lower drawing of Fig. 6 comprises a plurality of sub stacks 201. Each sub stack 201 comprises the stack and two supply/drainage plates 210. Supply/drainage plates 210 are placed at both ends of the stack. As illustrated in Fig. 5, to supply/drainage plates 210, a supply tube 63 and a discharge tube 65 of positive electrode circulation mechanism 6P, as well as a supply tube 64 and a discharge tube 66 of negative electrode circulation mechanism 6N are connected, which are described below. Two end plates 220 sandwich the plurality of sub stacks 201 from outside of the two outermost sub stacks 201. Fastening mechanism 230 fastens both end plates 220.

### [Cell Frame]

Cell frame 5 comprises bipolar plate 51 and a frame member 52, as illustrated in the upper drawing of Fig. 6. Frame member 52 surrounds the outer circumference of bipolar plate 51. Between bipolar plates 51 of cell frames 5 that are adjacent to each other, a single battery cell 4 is formed. Positive electrode 4P is placed facing a first face of bipolar plate 51. Negative electrode 4N is placed facing a second face of bipolar plate 51. The second face of bipolar plate 51 is opposite to the first face of bipolar plate 51. At frame member 52, liquid supply manifolds 53, 54, liquid supply slits 53s, 54s, liquid discharge manifolds 55, 56, and liquid discharge slits 55s, 56s are formed, which are described below. Between frame members 52, a ring-shaped sealing member 57 is placed in a ring-shaped sealing groove, as illustrated in Fig. 5.

### [Positive Electrode Circulation Mechanism, Negative Electrode Circulation Mechanism]

Positive electrode circulation mechanism 6P comprises a tank 61, a supply tube 63, a discharge tube 65, and a pump 67, as illustrated in Fig. 5. The positive electrolyte is stored in tank 61. The positive electrolyte also flows through supply tube 63 and discharge tube 65. Supply tube 63 connects tank 61 with the positive electrode cell. Discharge tube 65 connects the positive electrode cell with tank 61. Pump 67 pressure feeds the positive electrolyte from tank 61. Pump 67 is provided at some midpoint on the supply tube 63.

Negative electrode circulation mechanism 6N comprises a tank 62, a supply tube 64, a discharge tube 66, and a pump 68. The negative electrolyte is stored in tank 62. The negative electrolyte also flows through supply tube 64 and discharge tube 66. Supply tube 64 connects tank 62 with the negative electrode cell. Discharge tube 66 connects the negative electrode cell with tank 62. Pump 68 pressure feeds the negative electrolyte from tank 62. Pump 68 is provided at some midpoint on the supply tube 64.

During charging or discharging operation, the positive electrolyte and the negative electrolyte flow in the manner described below. By pump 67, the positive electrolyte flows from tank 61 through supply tube 63, and is supplied to the positive electrode cell. The positive electrolyte flows from liquid supply manifold 53 through liquid supply slit 53s illustrated in the upper drawing of Fig. 6, and is supplied to positive electrode 4P. The positive electrolyte thus supplied to positive electrode 4P flows from the lower edge of positive electrode 4P toward the upper edge, as shown by the arrows in the upper drawing of Fig. 6. The positive electrolyte thus flown through positive electrode 4P flows through liquid discharge slit 55s, and is discharged into liquid discharge manifold 55. The positive electrolyte flows from the positive electrode cell through discharge tube 65, and is discharged into tank 61. By pump 68, the negative electrolyte flows from tank 62 through supply tube 64, and is supplied to the negative electrode cell. The negative electrolyte flows from liquid supply manifold 54 through liquid supply slit 54s, and is supplied to negative electrode 4N. The negative electrolyte thus supplied to negative electrode 4N flows from the lower edge of negative electrode 4N toward the upper edge, as shown by the arrows in the upper drawing of Fig. 6. The negative electrolyte thus flown through negative electrode 4N flows through liquid discharge slit 56s, and is discharged into liquid discharge manifold 56. The negative electrolyte flows from the negative electrode cell through discharge tube 66, and is discharged into tank 62. By the supplying and discharging, the positive electrolyte and the negative electrolyte are circulated to the positive electrode cell and the negative electrode cell. During standby in which neither charging nor discharging takes place, pump 67 and pump 68 are halted. That is, the positive electrolyte and the negative electrolyte are not circulated.

### [Electrolyte]

RF battery system 100 comprises the positive electrolyte and the negative electrolyte that are supplied to battery cell 4. A positive electrode active material included in the positive electrolyte is one or more types selected from the group consisting of manganese ions, vanadium ions, iron ions, polyacids, quinone derivatives, and amines, for example. A negative electrode active material included in the negative electrolyte is one or more types selected from the group consisting of titanium ions, vanadium ions, chromium ions, polyacids, quinone derivatives, and amines, for example. An example of the electrolyte is a vanadium-based electrolyte in which both the positive electrode active material and the negative electrode active material are vanadium ions. When the positive electrolyte includes manganese ions and the negative electrolyte includes titanium ions, RF battery system 100 may have a high electromotive force. Fig. 5 illustrates an aspect where ions included in the positive electrolyte are manganese (Mn) ions and ions included in the negative electrolyte are titanium (Ti) ions. Each of a solvent of the positive electrolyte and a solvent of the negative electrolyte is an aqueous solution that includes one or more acids, or salt(s) of one or more acids, selected from the group consisting of sulfuric acid, phosphoric acid, nitric acid, and hydrochloric acid.

### «Test Examples»

A plurality of electrodes were prepared to construct a battery cell and an RF battery system, and the cell resistivity and the pressure loss were evaluated. The composition and properties of the electrode of each sample are shown in Table 1. The cell resistivity and pressure loss of the RF battery system of each sample are shown in Table 2.

"Composition" in Table 1 includes the content ratios (mass%) of carbon fibers, carbon particles, and binder, the material of binder, and the mass ratio of binder to carbon particles.

"Properties" in Table 1 includes the mass per unit area (g/m²), the thickness (mm), the first compressive strain factor, the second compressive strain factor, and the third compressive strain factor. The thickness is the first thickness described in the embodiment section. Regarding the first compressive strain factor, the surface pressure applied to the electrode is 0.8 MPa. Regarding the second compressive strain factor, the surface pressure applied to the electrode is 0.3 MPa. Regarding the third compressive strain factor, the surface pressure applied to the electrode is 0.5 MPa.

The content ratios of carbon fibers, carbon particles, and binder, the average diameter of carbon fibers, the average diameter of carbon particles, the mass per unit area, the thickness, the void rate in the non-compressed state, and the compressive strain factors were determined by methods that are described in the embodiment section. The mass ratio of binder to carbon particles was determined by dividing the content ratio of binder by the content ratio of carbon particles.

### [Samples No. 1 to No. 6]

The electrodes of Samples No. 1 to No. 6 are each a nonwoven fabric that includes carbon fibers, carbon particles, and a binder. The binder in the electrode of each sample is made of a carbon material or a resin. "Carbon" in Table 1 means a carbon material.

The average diameter of the carbon fibers in the electrode of each sample is within the range of 2 µm to 30 µm.

The electrode of each sample includes a plurality of primary particles. Each of the plurality of primary particles is a carbon particle that has a porosity attributed to the pores of 10% or more and a highest peak diameter of the pores of 1 µm or less. In other words, each primary particle is a first particle described above. The average diameter of the plurality of primary particles in the electrode of each sample is within the range of 0.01 µm to 15 µm.

The void rate of the electrode of each sample in the non-compressed state is within the range of 50% to 99%.

### [Samples No. 101 to No. 103]

The electrodes of Samples No. 101 and No. 102 each is a nonwoven fabric that includes carbon fibers, carbon particles, and a binder. The electrode of Sample No. 101 includes a plurality of primary particles, and each primary particle is a carbon particle that has a porosity attributed to the pores of 10% or more. The electrode of Sample No. 102 includes a plurality of primary particles, and each primary particle is a second particle that has a porosity attributed to the pores of 0%.

The electrode of Sample No. 103 is a paper sheet that includes carbon fibers and a binder and does not include carbon particles.

**[Table 1]**

| Sample No. | Composition | | | | | Properties | | | | |
|---|---|---|---|---|---|---|---|---|---|---|
| | Carbon fibers | Carbon particles | Binder | | Binder/ (carbon particles) mass ratio | Mass per unit area | Thickness | First compressive strain factor | Second compressive strain factor | Third compressive strain factor |
| | Content ratio in mass | Content ratio in mass | Content ratio in mass | Material | | g/m² | mm | Surface pressure 0.8 MPa | Surface pressure 0.3 MPa | Surface pressure 0.5 MPa |
| 1 | 77% | 11% | 12% | Carbon | 109 | 57 | 0.45 | 0.83 | 0.72 | 0.78 |
| 2 | 74% | 13% | 13% | Carbon | 100 | 67 | 0.56 | 0.92 | 0.83 | 0.88 |
| 3 | 55% | 15% | 30% | Carbon | 2.00 | 200 | 1.07 | 0.71 | 0.50 | 0.62 |
| 4 | 80.2% | 196% | 0.2% | Resin | 0.01 | 137 | 1.2 | 0.72 | 0.61 | 0.68 |
| 5 | 56% | 6% | 38% | Carbon | 6.33 | 135 | 0.57 | 0.67 | 0.54 | 0.61 |
| 6 | 88% | 4% | 8% | Carbon | 200 | 57 | 0.5 | 0.83 | 0.78 | 0.84 |
| 101 | 50% | 8% | 42% | Carbon | 5.25 | 150 | 0.67 | 0.53 | 0.40 | 0.46 |
| 102 | 28% | 24% | 48% | Carbon | 200 | 180 | 0.52 | 0.45 | 0.27 | 0.35 |
| 103 | 60% | 0% | 40% | Carbon | - | 70 | 0.23 | 0.31 | 0.26 | 0.28 |

### [Evaluation of Cell Resistivity]

The electrode of each sample was used to produce an RF battery system that comprised a single-cell battery, and the cell resistivity was measured. The single-cell battery comprises a single battery cell. In other words, each of the number of positive electrodes, the number of membranes, and the number of negative electrodes is one. The single-cell battery is formed by stacking a first cell frame, a positive electrode, a membrane, a negative electrode, and a second cell frame in this order. The membrane is sandwiched between the positive electrode and the negative electrode. The first cell frame is placed so that the positive electrode comes into contact with a bipolar plate of the first cell frame. The second cell frame is placed so that the negative electrode comes into contact with a bipolar plate of the second cell frame. On the surface in contact with the positive electrode or the negative electrode, each bipolar plate comprises a plurality of grooves in which the electrolyte can flow. The positive electrode is a carbon paper sheet. The negative electrode is the electrode of each sample. The positive electrolyte is a manganese sulfate solution that includes manganese ions. The negative electrolyte is a titanium sulfate solution that includes titanium ions.

The single-cell battery of each sample was charged in the manner described below, and conductive resistivity (Ω·cm²), charge-transfer resistivity (Ω·cm²), and diffusive resistivity (Ω·cm²) were determined by an alternating-current impedance method. Results are shown in Table 2, together with cell resistivity (Ω·cm²). Cell resistivity is the sum of conductive resistivity, charge-transfer resistivity, and diffusive resistivity. The charging here was carried out to reach a midpoint state of charge (SOC). The midpoint SOC is an average value of the sum of the highest SOC value and the lowest SOC value during constant-current charging and discharging performed at a current density of 100 mA/cm². The constant-current charging and discharging was carried out by switching from charging to discharging when the voltage reached 1.62 V and then switching from discharging to charging when the voltage reached 1.0 V.

The conductive resistivity was an impedance at the time when the measurement frequency in the alternating-current impedance method was 1 kHz.

The charge-transfer resistivity and the diffusive resistivity were measured by using a commercially-available measurement apparatus, under a bias at a value around the open circuit voltage, at a voltage amplitude of 10 mV, at a measurement frequency within the range of 10 kHz to 10 mHz.

### [Evaluation of Pressure Loss]

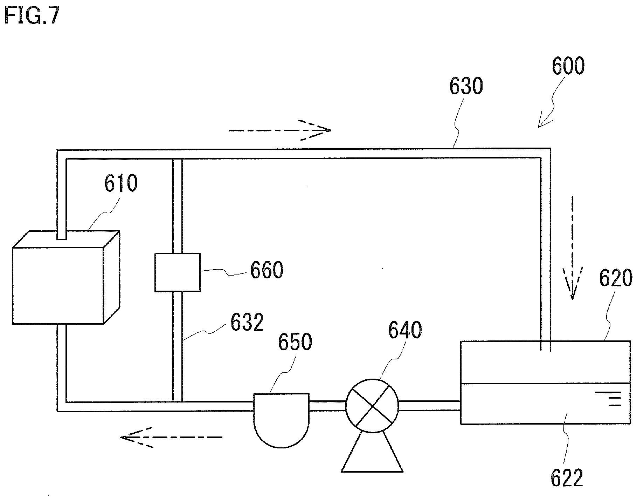

With the use of a measuring system 600 illustrated in Fig. 7, pressure loss ΔP of the electrode of each sample was measured. Measuring system 600 comprises a measurement cell 610, a fluid tank 620, a pipe 630, a pump 640, a flowmeter 650, and a differential pressure gauge 660.

Measurement cell 610 is a single-cell battery that has the same structure as the single-cell battery used in the above-mentioned cell resistivity evaluation. Fluid tank 620 stores a fluid 622 that is to be supplied to the electrode inside the measurement cell 610. Fluid 622 here is water, for example. Pipe 630 connects fluid tank 620 with measurement cell 610. Pump 640 is provided to pipe 630. Pump 640 pressure feeds fluid 622 from fluid tank 620 to measurement cell 610. Fluid 622 discharged from measurement cell 610 flows through pipe 630 back to fluid tank 620. By pump 640 and pipe 630, fluid 622 inside the fluid tank 620 is circulated and supplied to measurement cell 610. The dash-dot arrows in Fig. 7 represent the direction of flow of fluid 622. Flowmeter 650 is placed on pipe 630, at a position downstream of pump 640 and upstream of measurement cell 610. Flowmeter 650 measures the flow rate of fluid 622 discharged from pump 640. On pipe 630, at a position downstream of flowmeter 650, a branch pipe 632 for bypassing measurement cell 610 is provided. Differential pressure gauge 660 is provided on branch pipe 632. Differential pressure gauge 660 is placed in parallel with measurement cell 610.

Differential pressure gauge 660 measures the difference (P0-P1) between a pressure P0 of fluid 622 supplied to measurement cell 610 and a pressure P1 of fluid 622 discharged from measurement cell 610. Pressure loss ΔP is the difference between these pressures, (P0-P1). The lower the pressure loss ΔP is, the more excellent the measurement cell 610 is in the flowability of the electrolyte. The pressure loss of each sample is expressed as a value relative to the pressure loss ΔP of Sample No. 1, which is regarded as 1.0.

**[Table 2]**

| Sample No. | Cell resistivity | Conductive resistivity | Charge-transfer resistivity | Diffusive resistivity | Pressure loss |
|---|---|---|---|---|---|
| | Ω·cm² | Ω·cm² | Ω·cm² | Ω·cm² | |
| 1 | 0.58 | 0.22 | 0.19 | 0.17 | 1.0 |
| 2 | 0.53 | 0.23 | 0.15 | 0.15 | 1.0 |
| 3 | 0.57 | 0.24 | 0.16 | 0.17 | 1.2 |
| 4 | 0.58 | 0.23 | 0.15 | 0.20 | 1.1 |
| 5 | 0.57 | 0.28 | 0.14 | 0.14 | 1.2 |
| 6 | 0.52 | 0.25 | 0.16 | 0.11 | 0.9 |
| 101 | 0.72 | 0.25 | 0.20 | 0.27 | 1.4 |
| 102 | 0.78 | 0.25 | 0.25 | 0.28 | 1.5 |
| 103 | 0.85 | 0.20 | 0.24 | 0.41 | 1.3 |

Referring to Table 2, Samples No. 1 to No. 6 have low diffusive resistivity as compared to Samples No. 101 to No. 103. Moreover, Samples No. 1 to No. 6 also have low charge-transfer resistivity as compared to Samples No. 101 to No. 103. Further, Samples No. 1 to No. 4 also have low conductive resistivity as compared to Samples No. 101 and No. 102. As a result, Samples No. 1 to No. 6 have low cell resistivity as compared to Samples No. 101 to No. 103. As a potential reason for this, as seen in Table 1, Samples No. 1 to No. 6 have high first compressive strain factors as compared to Samples No. 101 to No. 103. Referring to Table 1, Samples No. 1 to No. 6 each of which has a first compressive strain factor of more than 0.6 have low content ratios of binder as compared to Samples No. 101 to No. 103. It is also conceivable that in the electrodes of Samples No. 1 to No. 6 having high first compressive strain factors of more than 0.6, the active site density could have increased when compressed and so could the contact points between carbon fibers. Further, when compressed, the contact resistance between the electrodes of Samples No. 1 to No. 6 and the bipolar plate could have been decreased. As another potential reason for the low cell resistivity, Samples No. 1 to No. 6 included carbon particles and therefore had excellent battery reactivity.

Samples No. 1 to No. 6 have low pressure loss and excellent flowability of the electrolyte, as compared to Samples No. 101 to No. 103. As a potential reason for this, Samples No. 1 to No. 6 have low content ratios of binder as described above.

It is intended that the scope of the present invention is defined by claims, not by these examples, and encompasses all modifications and variations equivalent in meaning and scope to the claims.

### REFERENCE SIGNS LIST

1 electrode
4 battery cell, 4M membrane, 4P positive electrode, 4N negative electrode
5 cell frame
6 circulation mechanism, 6P positive electrode circulation mechanism, 6N negative electrode circulation mechanism
31 carbon fiber, 32 carbon particle
32a primary particle, 32b first particle, 32h pore
33 binder, 35 void
51 bipolar plate, 52 frame member, 53, 54 liquid supply manifold
53s, 54s liquid supply slit, 55, 56 liquid discharge manifold
55s, 56s liquid discharge slit, 57 sealing member
61, 62 tank, 63, 64 supply tube, 65, 66 discharge tube
67, 68 pump
100 redox-flow battery system (RF battery system)
200 cell stack, 201 sub stack
210 supply/drainage plate, 220 end plate, 230 fastening mechanism
300 AC/DC converter, 310 electric power generating member
320 transformer facility, 330 load
500 measurement sample, 501 bottom plate, 502 upper plate
600 measuring system, 610 measurement cell, 620 fluid tank
622 fluid, 630 pipe, 632 branch pipe, 640 pump
650 flowmeter, 660 differential pressure gauge
t2 second thickness

## Claims

1. An electrode for use in a redox-flow battery system, the electrode comprising:
carbon fibers, wherein
a compressive strain factor determined by dividing a difference between a first thickness of the electrode and a second thickness of the electrode by the first thickness is more than 0.6,
the first thickness is a thickness of the electrode measured in a state where a surface pressure of 0.7 kPa is applied to the electrode, and
the second thickness is a thickness of the electrode measured in a state where a surface pressure of 0.8 MPa is applied to the electrode.

2. The electrode according to claim 1, comprising carbon particles.

3. The electrode according to claim 2, wherein a content ratio of the carbon particles is not less than 1 mass% and less than 50 mass% relative to the electrode regarded as 100 mass%.

4. The electrode according to claim 2 or 3, comprising a plurality of primary particles, wherein
each of the plurality of primary particles is the carbon particle, and
the plurality of primary particles have an average diameter of 15 µm or less.

5. The electrode according to any one of claims 2 to 4, comprising first particles, wherein
each of the first particles is the carbon particle having a plurality of pores on a surface of the first particle, and a porosity attributed to the pores is 10% or more.

6. The electrode according to claim 5, wherein a highest peak diameter of the pores is 1 µm or less.

7. The electrode according to any one of claims 1 to 6, comprising a binder.

8. The electrode according to claim 7, wherein a content ratio of the binder is not less than 0.1 mass% and less than 40 mass% relative to the electrode regarded as 100 mass%.

9. The electrode according to claim 7 or 8, wherein the binder is made of a carbon material or a resin.

10. The electrode according to any one of claims 1 to 8, comprising carbon particles and a binder, wherein
the binder is made of a carbon material, and
a mass ratio of the binder to the carbon particles is from 0.1 to 10.

11. The electrode according to any one of claims 1 to 8, comprising carbon particles and a binder, wherein
the binder is made of a resin, and
a mass ratio of the binder to the carbon particles is from 0.005 to 3.

12. The electrode according to any one of claims 1 to 11, wherein
a compressive strain factor determined by dividing a difference between the first thickness and a third thickness of the electrode by the first thickness is 0.90 or less, and
the third thickness is a thickness of the electrode measured in a state where a surface pressure of 0.3 MPa is applied to the electrode.

13. The electrode according to any one of claims 1 to 12, wherein
a compressive strain factor determined by dividing a difference between the first thickness and a fourth thickness of the electrode by the first thickness is 0.92 or less, and
the fourth thickness is a thickness of the electrode measured in a state where a surface pressure of 0.5 MPa is applied to the electrode.

14. The electrode according to any one of claims 1 to 13, wherein a mass per unit area of the electrode is from 20 g/m² to 600 g/m².

15. The electrode according to any one of claims 1 to 14, wherein the first thickness is from 0.10 mm to 3.0 mm.

16. The electrode according to any one of claims 1 to 15, wherein a void rate of the electrode measured in a state where no surface pressure is applied to the electrode is 50% or more.

17. A battery cell for use in a redox-flow battery system, the battery cell comprising the electrode according to any one of claim 1 to 16.

18. A cell stack for use in a redox-flow battery system, the cell stack comprising a plurality of the battery cells according to claim 17.

19. A redox-flow battery system comprising the battery cell according to claim 17 or the cell stack according to claim 18.

20. The redox-flow battery system according to claim 19, comprising:
a positive electrolyte and a negative electrolyte that are supplied to the battery cell, wherein
the positive electrolyte includes manganese ions, and
the negative electrolyte includes titanium ions.
